# EUROPÄISCHE PATENTSCHRIFT

(11) **EP 0 304 667 B1**
(45) Veröffentlichungstag und Bekanntmachung des Hinweises auf die Patenterteilung: **21.04.1993**
(21) Anmeldenummer: 88112333.5
(22) Anmeldetag: 29.07.1988
(51) Int. Cl.: B03B 9/06, B29B 17/02

(54) **Verfahren zur Wiederaufbereitung der PET-Bestandteile von gebrauchten, PET-haltigen Produkten, sowie Anordnung zur Durchführung des Verfahrens**
Method of recovering PET substances from used PET containing products, and apparatus for carrying out the method
Procédé de récupération des composants PET de produits usés contenant du PET, ainsi que dispositif pour la mise en oeuvre du procédé

(30) Priorität: 27.08.1987 DE 3728558
(43) Veröffentlichungstag der Anmeldung: 01.03.1989
(73) Patentinhaber: AKW Apparate und Verfahren GmbH, D-92242 Hirschau (DE)
(72) Erfinder: Ropertz, Guido, Dr. Ing., D-8450 Amberg (DE); Kaniut, Peter, Dipl.-Ing., D-8450 Amberg (DE)
(74) Vertreter: Richter, Bernhard, Dipl.-Ing.

(56) Entgegenhaltungen:
- EP-A- 0 068 502
- DE-A- 2 900 666
- DE-A- 2 926 233
- DE-A- 3 512 965
- AUFBEREITUNGS-TECHNIK, Band 27, Nr. 9, September 1986, Seiten 489-494, Wiesbaden, DE; G. ROPERTZ: "Wirtschaftliche Kunststoffrückgewinnung aus kommunalen und industriellen Abfällen"
- PLASTICS & RUBBER WEEKLY, Nr. 1181, 28 März 1987, Seiten 12-13, Croydon, GB: "Experimental plant for recycling PET bottles"
- CHEMIE-ANLAGEN+VERFAHREN, Band 17, Nr. 8, August 1984, Seiten 17-18,21-22, Leinfelden-Echterdingen, DE; G. ROPERTZ: "Nassmechanische Aufbereitung von Kunststoffabfällen"

## Beschreibung

Die Erfindung betrifft zunächst ein Verfahren zur Wiederaufbereitung der PET (Polyester = Polyethylenterephtalat)-Bestandteile von gebrauchten, PET-haltigen Produkten, wobei die PET-haltigen Produkte zerkleinert, windgesichtet, gewaschen, von anderen Bestandteilen separiert, entwässert und getrocknet werden, sowie eine Abscheidung eines Metallanteiles erfolgt (Oberbegriff des Anspruches 1). Seit einiger Zeit werden in verstärktem Maße Getränkeflaschen (z.B. 2-Liter-Limonadenflaschen) aus PET hergestellt. Dieses Material ist sehr stabil und kochfest, sowie durchsichtig wie Glas. Es wird daher trotz seines relativ hohen Herstellungspreises, wie vorstehend erläutert, in der Getränkeindustrie verwendet. Sowohl aus Gründen des Umweltschutzes (Abfallbeseitigung), als auch wegen der bevorzugten Eigenschaften und der hohen Herstellungskosten von PET sollen gebrauchte, PET-haltige Flaschen und dergleichen nicht einfach weggeworfen, sondern im sogenannten Recycling zu wieder verwendbarem Kunststoffgranulat aufgearbeitet werden. Dieses erzielte Endprodukt liegt in sogenannten Pellets (Körnchen) vor. Dabei ist es möglich, von solchen, durch Recycling gewonnenen Pellets oder Körnchen wieder Teile aus PET herzustellen. Die bisher hierdurch gewinnbaren Körnchen sind allerdings nicht glasklar, sondern nur milchig oder weißlich, bzw. entsprechend den Ausgangsprodukten mischfarbig. Hiermit können also keine glasklaren oder in der Farbe ansprechenden, neuen Gegenstände hergestellt werden. Diese bisher herstellbaren Körnchen können daher auch nur zur Herstellung von neuen Teilen verwendet werden, bei denen es auf Glasklarheit, bzw. eine gute Farbgebung nicht ankommt (z.B. Herstellung von Polyesterfasern, Verpackungsbändern, Halbzeugen usw.).

Die wieder aufzubereitenden, gebrauchten Gegenstände sind in allererster Linie, in vielen Fällen sogar ausschließlich die erläuterten Getränkeflaschen. Es kommt aber auch z.B. Röntgenfilm- oder Tonbandträgermaterial infrage. Diese gebrauchten Getränkeflaschen bestehen nicht nur aus dem eigentlichen, aus PET (Polyester = Polyethylenterephthalat) hergestellten Flaschenkörper, sondern auch aus anderen Materialien, wie einer Kappe aus PP (Polypropylen), einem Fuß aus PE (Polyethylen), Etiketten, EVA (Ethylenvinylacetat), Klebstoffen zur Anbringung der Etiketten und oft auch einer Verschlußkappe aus Aluminium. Zur Wiedergewinnung des PET ist es daher nötig, dieses von den übrigen Bestandteilen (Fraktionen) zu trennen.

Ein Verfahren gemäß dem Oberbegriff des Anspruches 1 ist auf den Seiten 12 und 13 der Zeitschrift PLASTICS & RUBBER WEEKLY, vom 20. März 1987 beschrieben. Dabei erfolgt die Separierung der schwereren Teilchen aus PET und Aluminium (sofern vorhanden) von den leichteren Teilen aus PP, PE, EVA und anderen Bestandteilen (sofern diese nicht schon vorher durch Windsichten entfernt wurden) mit Hilfe eines Schwimm-Sink-Prozesses. Dieses Schwimm-Sink-Verfahren hat den Nachteil, daß die Ausbeute an PET relativ gering ist, indem ein erheblicher Anteil an PET-Teilchen nicht aufgrund seiner Schwere und dem hierdurch verursachten Absinken gewonnen werden kann, sondern mit den leichten Bestandteilen wegschwimmt. Dies kann z.B. dann geschehen, wenn Gas- oder Luftblasen an diesen PET-Teilchen hängen. Möglichkeiten einer Klassierung, Farbsortierung und Kristallisierung der separierten PET-Teilchen sind nicht vorgesehen.

Aus DE-OS 29 26 233 ist ein Verfahren zur Wiedergewinnung von Polyethylen-Terephthalat aus Polyethylen-Terephthalat enthaltenden Stoffgemischen unter Verwendung mindestens eines Hydrozyklons bekannt, wobei als Trennflüssigkeit Ethylenglykol verwendet wird. Diese Vorveröffentlichung erfüllt zunächst nicht den Oberbegriff des Anspruches 1, da sie nicht das Problem der Abscheidung von Metallteilen berührt. Die Abscheidung von Metallteilen ist aber gerade bei der Rückgewinnung der Polyethylenterephthalatteile von Getränkeflaschen mit Metallverschlußkapseln wesentlich. Dies aber ist ein wesentlicher Bereich der vorliegenden Erfindung. Hinzu kommt als Nachteil, daß Ethylenglykol relativ teuer ist, d.h. die Betriebskosten einer damit arbeitenden Anlage trotz der teilweisen Rückgewinnung dieser Trennflüssigkeit erhöht, da immer mit einem gewissen Verlust an Trennflüssigkeit im Verlauf des Prozesses gerechnet werden muß. Schließlich werden auch die Fragen des Klassierens und Farbsortierens in dieser Vorveröffentlichung nicht berührt. Aus einem Aufsatz "Nassmechanische Aufbereitung von Kunststoffabfällen'' in DE-Z "Chemieanlagen und Verfahren" 1984 Nr. 8, Seite 17 bis 22 ist aus der Seite 22 der Hinweis zu entnehmen, daß zur Trennung der Komponenten PE und PETP ein bis zwei Hydrozyklonstufen mit entsprechenden Waschbehältern eingesetzt werden müssen. Die dabei erzielten Trennergebnisse sind vergleichbar mit der früheren Reinigung und Trennung von PVC/PE-Granulatgemischen. Auch diese Literaturstelle bezieht sich nur auf die Trennung von PE und PETP (dies ist gleich PET), jedoch nicht von anderen Stoffen, wie Metall oder Papier. Außerdem fehlt auch dieser Literaturstelle ein Hinweis auf die Fragen der Klassierung und Farbsortierung.

Aus der Literaturstelle "Wirtschaftliche Kunststoffrückgewinnung aus kommunalen und industriellen Abfällen" von ROPERTZ in 163 Aufbereitungs-Technik 27 (1986) September, No. 9, Wiesbaden, Deutschland ist zunächst für das Sortieren von Hausmüll, aber ohne Abscheidung von Metallteilchen, eine Trennung von Kunststoff aus dem Hausmüll über Hydrozyklone beschrieben. Anschließend wird über die Möglichkeit der Auftrennung der schweren Fraktion mittels eines Schwertrübezyklons berichtet, ohne aber nähere Angaben über die Schwerfraktion zu machen. Ferner wird in dieser Literaturstelle über das Recycling von PET aus Flaschen- und Filmmaterial berichtet. Hierbei soll PET sortenrein, d.h. separiert von AL- oder PE-Verschlußkappen sowie Papieretiketten und Bodenteilen aus PE zurückgewonnen, extrudiert und granuliert werden. Dazu wird ein Aufbereitungsstammbaum über Zerkleinerungsschritte, naßmechanische Trennstufen zur Separierung von PE und Papier sowie von Sand und Feinstkorn aus der Mühle angegeben. Anschließend erfolgt eine Trocknung mit gleichzeitiger Teilkristallisierung der PET-Schnitzel, wovon AL elektrostatisch abgeschieden wird. Der Einsatz von Hydrozyklonen und eine Farbsortierung mit vorgeschalteter Klassierung werden an dieser Stelle nicht erwähnt. Die angegebene elektrostatische Abscheidung von Aluminium ist nachteilig. Man erreicht keine befriedigende Ausbeute und es wird viel an PET verloren. Dies beruht darauf, daß Aluminiumstücke, an denen noch ein Teil der Kunststoffe oder Dichtungen ankleben, sich im elektrostatischen Feld oft wie PET-Teilchen verhalten und meist nicht abgetrennt werden können. Beim elektrostatischen Verfahren wären sehr viele Stufen hintereinander zu schalten, um auch annähernd ein Ergebnis zu erhalten, welches dem Ergebnis mit den Mitteln der nachstehend erläuterten Erfindung nahekäme. Ein solcher Aufwand ist aber aus wirtschaftlichen Gründen nicht zu vertreten.

Die Aufgabe der Erfindung besteht demgegenüber darin, mit einem möglichst hohen Wirkungsgrad an Ausbeute, d.h. möglichst wenigen Verlusten an PET-Teilchen, ein Endprodukt an rückgewonnenen PET-Teilchen von großer Reinheit und in der gewünschten Farbgebung, sowie Klarheit zu erhalten, und in dem Zusammenhang für eine einwandfreie Abscheidung von Metallteilchen, insbesondere Aluminiumteilchen, zu sorgen.

Die Lösung dieser Aufgabe wird zunächst verfahrensmäßig, ausgehend vom genannten Oberbegriff des Anspruches 1, darin gesehen, daß zunächst die Abtrennung der Metallanteile, bevorzugt Aluminiumteile, mit Hilfe einer Schwertrübe über einen Hydrozyklon erfolgt, daß anschließend die Separierung der PET-Teile von den Suspensionsteilen aus anderen Werkstoffen, einschließlich anderer Kunststoffe, mittels einer weiteren Hydrozyklonanordnung geschieht, daß hiernach eine Klassierung der entwässerten und getrockneten PET-Teile erfolgt, und daß danach eine Farbsortierung der klassierten, getrockneten PET-Teile vorgenommen wird (Kennzeichen des Anspruches 1). Es hat sich gezeigt, daß die Separierung der Metallteile mit Hilfe einer Schwertrübe über einen Hydrozyklon wesentlich effektiver als die elektrostatische Abscheidung ist, d.h. praktisch alle vorhandenen Metallteilchen separiert. Im Schwertrübeverfahren genügt der Dichteunterschied zwischen Metall, insbesondere Alumunium und PET, um die vorgenannte Abscheidung zu bekommen. Die sich daran anschließende Separierung der PET-Teilchen mittels einer Hydrozyklonanordnung erreicht, daß der weitaus größte Teil der im Gemenge (Suspension) enthaltenen PET-Teilchen von den übrigen Fraktionen getrennt wird. Das Zusammenwirken der beiden vorgenannten Stufen, nämlich zum einen nach dem Schwertrübeverfahren die Abscheidung der Metallteilchen und zum zweiten, sich daran anschließend, die Separierung der schweren PET-Teilchen von leichteren Kunststoffteilchen und anderen leichteren Bestandteilen wie Papier, ergibt vorteilhafterweise eine nahezu vollständige Trennung der vorgenannten Teilchen bei einer sehr hohen Ausbeute an PET. Der Unterlauf der Hydrozyklonanordnung enthält nämlich nur noch die PET-Teilchen, nicht aber übrige, demgegenüber leichtere Bestandteile wie PE, PP u.s.w. Die Erfindung kombiniert ferner die durch die vorgenannten Verfahrensschritte erzielten Vorteile eines sehr hohen Wirkungs- oder Abscheidungsgrades der Separierungen mit dem Vorteil der Klassierung und Farbsortierung zur Erzielung eines sehr reinen Endproduktes. Die Merkmale des Anspruches 1 wirken also im Sinne der o.g. Aufgabenstellung zusammen. Dabei ist auch von Bedeutung, daß man vor den Verfahrensschritt der Farbsortierung die dazu vorteilhafte Maßnahme der Klassierung vorgeschaltet hat, welche die Effizienz der Farbsortierung erhöht. Das erzielte Endprodukt ist nach den jeweiligen Farben (z.B. braun, grün und transparent) sortiert. Je nach seiner Farbe kann es dann entsprechend zur Herstellung neuer Produkte wieder verwendet werden. Dies war mit dem eingangs erläuterten bekannten Verfahren nicht möglich, da hierbei die erzielten Endprodukte eine vorher nicht bestimmbare Farbe bekamen, so daß die mit solchen Pellets oder Körnchen hergestellten neuen Produkte keine Klarheit, bzw. klare Farbe hatten, sondern milchig waren, bzw. eine entsprechende Farbmischung aufwiesen.

Die Nachteile der Verwendung von Ethylenglykol als Trennmittel sind vermieden. Die Erfindung erlaubt die Verwendung einer beliebigen Waschflüssigkeit, insbesondere von Wasser. Die beim Gegenstand von DE-OS 29 26 233 vorgesehene Polykondensationsanlage in Form eines Reaktors ist nicht erforderlich.

Die Merkmale des Anspruches 2 stellen eine vorteilhafte Weiterbildung und Ausgestaltung des Verfahrensanspruches 1 dar.

Zur Erfindung gehört ferner die Aufgabe der Schaffung einer Anordnung, welche die Durchführung des Verfahrens nach Anspruch 1 oder Anspruch 2 ermöglicht, und zwar in einer Weise, daß die zum Verfahren gestellte Aufgabe hiermit gegenständlich gelöst und eine solche Anordnung auch in wirtschaftlicher Weise in der Praxis realisiert werden kann.

Zur Lösung dieser Aufgabe ist zunächst, ausgehend von einer Anordnung mit einem Zerkleinerer, einem Windsichter, einer Waschanordnung, einer Separierungsanordnung, einer Trocknungs- und einer Entwässerungsvorrichtung, sowie einem Abscheider des Metallanteiles (Oberbegriff des Anspruches 3) vorgesehen, daß zur Trennung der PET-Teilchen von Metallteilchen (bevorzugt Aluminiumteilchen) ein Schwertrübezyklon vorgesehen ist, daß der die leichteren Teile aus PET und weiterer Werkstoffe enthaltende Überlauf des Schwertrübezyklons über eine Leitung mit dem Zulauf einer Hydrozyklonanordnung aus zumindest zwei Hydrozyklonen verbunden ist, die in Reihe hintereinander für die Separierung des schweren PET-Anteiles von den leichteren Bestandteilen einer die zerkleinerten Produkte aufweisenden Suspension vorgesehen sind, daß dieser Hydrozyklonanordnung für den aus den PET-Teilchen bestehenden schweren Unterlauf des in Transportrichtung der zu trennenden Teilchen letzten Hydrozyklons eine Entwässerungsstufe nachgeordnet ist, daß der Entwässerungsstufe eine Trocknungsstufe nachgeschaltet ist, und daß im weiteren Verlauf der Förderung der zu trennenden Teilchen sich ein Klassierer und danach ein Farbsortierer des klassierten Gutes befindet (Kennzeichen des Anspruches 3). Es hat sich gezeigt, daß eine solche zwei- oder mehrstufige Hintereinanderanordnung von Hydrozyklonen die erläuterte vorteilhafte Abscheidung der Metallteilchen mit Hilfe eines Schwertrübezyklons sowie eine sehr gute, d.h. praktisch vollständige Trennung der leichteren (z.B. PE, PP und EVA) Teilchen von den schwereren PET-Teilchen und damit auch von den schwereren Metallteilchen ermöglicht. Die Anordnung der Trennstufe PET/AL vor der nachgeschalteten Hydrozyklonanordnung entlastet diese durch die vorherige Separierung der Metallteilchen und ermöglicht ferner die Reinigung der PET-Teilchen von eventuell verbliebenen Schwertrüberesten. Die Nachteile der eingangs erläuterten elektrostatischen Maßnahmen zur Abscheidung der Metallteilchen und auch die Nachteile des bisher allgemein für die Kunststoffseparierung eingesetzten Schwimm-Sink-Verfahrens sind vermieden. Auch ist der von solchen Hydrozyklonen beanspruchte Platz geringer als der Raumbedarf einer Schwimm-Sink-Anordnung. Der letztgenannte Vorteil ist bei der Unterbringung und Erstellung von Anlagen unter Umständen von wesentlicher Bedeutung. Hierdurch und durch die Anordnung der Entwässerung, Trocknung, Klasierung und Farbsortierung wird die gestellte Aufgabe gelöst.

Die Merkmale des Anspruches 6 schaffen, im Anschluß an die Klassierung und Farbsortierung gemäß Anspruch 5, PET-Teilchen von jeweils einer bestimmten gleichen Größe und gleicher Farbe und damit ein wegen seiner Homogenität qualitativ besonders hochwertiges Endprodukt.

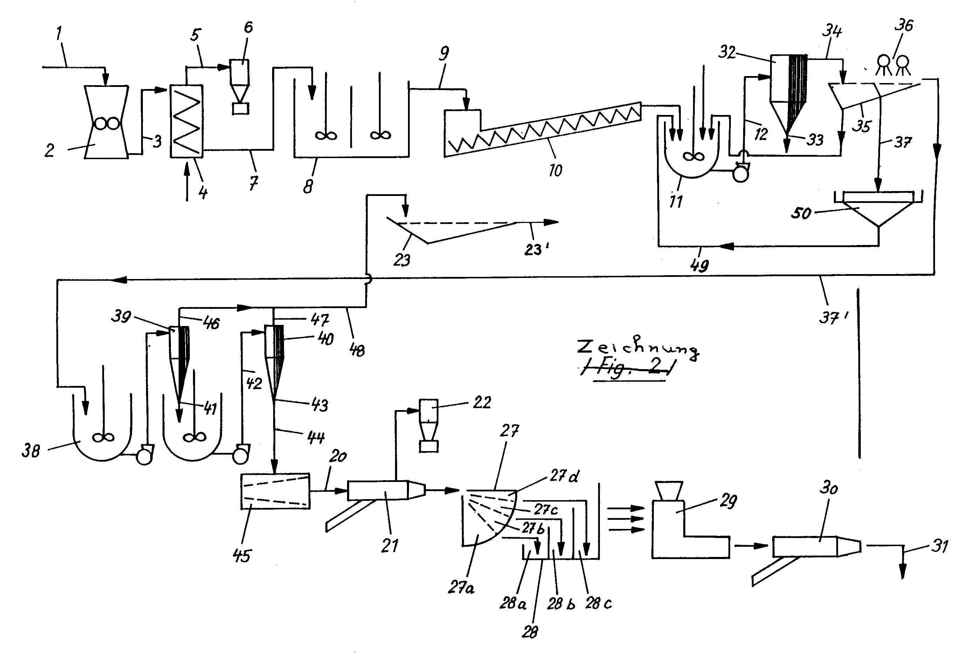

Auf den Inhalt der Unteransprüche wird ausdrücklich Bezug genommen. Dabei wird hinsichtlich weiterer Vorteile und Merkmale der Erfindung auf die übrigen, vorstehend nicht im einzelnen zitierten Unteransprüche, sowie auf die nachfolgende Beschreibung und die zugehörige, schematische Darstellung einer nach der Erfindung ausgestalteten Anlage verwiesen. In der einzigen Zeichnung ist hierzu schematisch und im Ablauf des Verfahrens die Anordnung eines entsprechenden Ausführungsbeispieles gezeigt.

Dieses Ausführungsbeispiel sei für den Rückgewinn (Recycling) des PET-Anteiles von PET-Flaschen und analogen Teilen bestimmt, die bei 1 einem Zerkleinerer 2 zugeführt werden.

Das zerkleinerte Gut gelangt über die Leitung 3 in einen Windsichter 4. Von dort wird Feinmaterial und Papier über eine Leitung 5 einem Gaszyklon 6 zugeleitet und abgeschieden. Der schwerere Unterlauf des Windsichters wird über die Leitung 7 einem mehrstufigen Friktionswäscher B zugeleitet, der diese Teile von Staub, Dreck u.s.w. reinigt. Insbesondere müssen auch an den PET-Teilchen noch klebende Etikettenreste abgelöst werden. Aus der zweiten, in der Zeichnung rechts gelegenen Waschstufe werden die gewaschenen Teilchen über eine Leitung 9 einem Waschbehälter 10 und von dort einem Suspensionsbehälter 11 zugeführt.

Der Ausgang des Suspensionsbehälters 11 geht über die Leitung 12 zu einem Schwertrübezyklon 32, dessen Unterlauf 33 die Aluminiumteilchen abscheidet, während der Überlauf 34 die PET und PE, PP, EVA Teilchen aufweist, die einem Entwässerungssieb 35 mit Brausen 36 zugeführt werden. Über eine Leitung 37 wird die durch die Bebrausung verdünnte Schwertrübe des Zyklons einem Eindicker 50 und von dort über die Leitung 49 wieder in den Behälter 11 rückgeführt. Die leichteren Bestandteile dieser Schwertrübetrennung, nämlich im vorliegenden Beispiel außer den PET-Teilchen auch noch PE, PP und EVA (Reste) gelangen über die Leitung 37' zu einer Hydrozyklonanordnung, die aus einem Suspensionsbehälter 38, einem ersten Hydrozyklon 39 (erste Hydrozyklonstufe) und einem zweiten Hydrozyklon 40 (zweite Hydrozyklonstufe) besteht. An dieser Stelle sei darauf hingewiesen, daß auch mehr als zwei Hydrozyklone in Reihenschaltung hintereinander vorgesehen sein können. Der Unterlauf 41 des ersten Hydrozyklons wird über einen Zwischenbehälter und eine Leitung 42 dem zweiten Hydrozyklon 40 zugeführt, dessen Unterlauf 43 nur noch die PET-Teilchen erhält, die über eine Leitung 44 zur Entwässerung 45 gelangen. Beide Überläufe 46, 47 der beiden Hydrozyklone 39, 40 enthalten die leichteren Teilchen PE, PP und EVA und gelangen über eine Leitung 48 zu der Entwässerung mit Trocknung 23 und werden hieraus gemäß Ziff. 23' abgeführt.

Die bei 45 entwässerten PET-Teilchen werden über die Leitung 20 zu einem Trockner 21 und von dort zu einem Klassierer 27 geführt. An jede der hier angedeuteten vier Klassierungsabteilungen 27a, 27b, 27c und 27d ist je ein Farbsortierer angeschlossen, wobei hier nur ein Farbsortierer 28 mit drei Abteilungen 28a, 28b und 28c für eine dieser Klassierungsabteilungen dargestellt ist. Somit erhält man für jede der Klassierungen 27a bis 27d eine Farbsortierung in die hier möglichen Farben. Dabei ist in diesem Ausführungsbeispiel für jede Kornklasse eine Sortierung der Teilchen in drei Farben vorgesehen, z.B. grün, braun und glasklar. Die Farbsortierung geschieht nach einem optischen Verfahren. Bevorzugt jede Kornklasse einer bestimmten Farbe, gegebenenfalls aber auch unterschiedliche Kornklassen der gleichen Farbe wird, bzw. werden dann einem Extruder 29 zugeführt, wobei die extrudierten Fäden auf gleiche Teilchengröße geschnitten werden. Anschließend erfolgt bei 30 eine Kristallisierung und bei 31 die Abfuhr der fertigen PET-Körnchen (Pellets), die dann wieder zur Herstellung neuer, aus PET bestehender Teile eingesetzt werden. Die vorstehend erwähnte Kristallisierung erfolgt durch Erhitzen und hat den Effekt, daß das Material gut lagerfähig ist, ohne dabei Wasser aufzunehmen.

## Patentansprüche

1. Verfahren zur Wiederaufbereitung der PET (Polyester = Polyethylenterephthalat)-Bestandteile von gebrauchten, PET-haltigen Produkten, wobei die PET-haltigen Produkte zerkleinert, windgesichtet, gewaschen, von anderen Bestandteilen separiert, entwässert und getrocknet werden, sowie eine Abscheidung eines Metallanteiles erfolgt, dadurch gekennzeichnet, daß zunächst die Abtrennung der Metallanteile, bevorzugt Aluminiumteile, mit Hilfe einer Schwertrübe über einen Hydrozyklon (32) erfolgt, daß anschließend die Separierung der PET-Teile von den Suspensionsteilen aus anderen Werkstoffen, einschließlich anderer Kunststoffe, mittels einer weiteren Hydrozyklonanordnung (39, 40) geschieht, daß hiernach eine Klassierung (27) der entwässerten und getrockneten PET-Teile erfolgt, und daß danach eine Farbsortierung (28) der klassierten, getrockneten PET-Teile vorgenommen wird.

2. Verfahren nach Anspruch 1, dadurch gekennzeichnet, daß sowohl der resultierende, leichte Bestandteile aufweisende Überlauf (46, 47) als auch der resultierende, schwerere Unterlauf (44) der Hydrozyklonanordnung (39, 40) jeweils einer Entwässerungs- und Trocknungsstufe (45, 21) zugeleitet wird.

3. Anordnung zur Durchführung des Verfahrens nach Anspruch 1 oder 2 mit einem Zerkleinerer, einem Windsichter, einer Waschanordnung, einer Separierungsanordnung, einer Trocknungs- und einer Entwässerungsvorrichtung, sowie einem Abscheider des Metallanteiles, dadurch gekennzeichnet, daß zur Trennung der PET-Teilchen von Metallteilchen (bevorzugt Aluminiumteilchen) ein Schwertrübezyklon (32) vorgesehen ist, daß der die leichteren Teile aus PET und weiterer Werkstoffe enthaltende Überlauf (34) des Schwertrübezyklons (32) über eine Leitung (37') mit dem Zulauf einer Hydrozyklonanordnung aus zumindest zwei Hydrozyklonen (39, 40) verbunden ist, die in Reihe hintereinander für die Separierung des schweren PET-Anteiles von den leichteren Bestandteilen einer die zerkleinerten Produkte aufweisenden Suspension vorgesehen sind, daß dieser Hydrozyklonanordnung (39, 40) für den aus den PET-Teilchen bestehenden schweren Unterlauf (43) des in Transportrichtung der zu trennenden Teilchen letzten Hydrozyklons (40) eine Entwässerungsstufe (45) nachgeordnet ist, daß der Entwässerungsstufe eine Trocknungsstufe (21) nachgeschaltet ist, und daß im weiteren Verlauf der Förderung der zu trennenden Teilchen sich ein Klassierer und danach ein Farbsortierer des klassierten Gutes befindet.

4. Anordnung nach Anspruch 4, dadurch gekennzeichnet, daß eine Verbindung (37) für die Schwertrübe des Überlaufes (34) des Schwertrübezyklons (32) in den Suspensionsbehälter (11) vorgesehen ist.

5. Anordnung nach Anspruch 3 oder 4, dadurch gekennzeichnet, daß an jeden, PET-Teilchen einer bestimmten Klasierung aufweisenden Ausgangsbehälter (27a bis 27d) des Klassierers (27) ein Farbsortierer (28) angeschlossen ist.

6. Anordnung nach einem der Ansprüche 3 bis 5, dadurch gekennzeichnet, daß für die PET-Teile einer bestimmten Farbe eine Extrusion (29) mit Zerkleinerung der extrudierten PET-Fäden vorgesehen und dem jeweiligen Farbsortierer nachgeordnet ist.

7. Anordnung nach Anspruch 6, dadurch gekennzeichnet, daß im Anschluß an die Extrusion (29) eine Kristallisierung (30) vorgesehen ist.

## Claims

1. Method for the recovery of PET (polyester-polyethyleneterephthalate) components from used products containing PET, wherein the products containing PET are comminuted, air-sifted, washed, separated from other components, drained and dried, as well as a dividing out of a metal component takes place, characterised thereby that initially the separating-out of the metal components, preferably aluminium parts, takes place with the aid of a heavy medium by way of a hydrocyclone (32), that subsequently the separation of the PET parts from the suspension parts of other materials, including other plastics, is effected by means of a further hydrocyclone arrangement (39, 40), that thereafter a classifying (27) of the drained and dried PET parts takes place, and that after that a colour sorting (28) of the classified and dried PET parts is undertaken.

2. Method according to claim 1, characterised thereby that not only the resultant overflow (46, 47) having light components but also the resultant heavy downflow (44) of the hydrocyclone arrangement (39, 40) are each conducted to a draining and drying stage (45, 21).

3. Arrangement for carrying out of the method according to claim 1 or 2, with a comminuting device, an air sifter, a washing arrangement, a separating arrangement, a drying and a draining device as well as a separator of the metal component, characterised thereby that a heavy medium cyclone (32) is provided for for the separation of the PET particles from metal particles (preferably aluminium particles), that the overflow (34), which contains the lighter particles of PET and further materials, of the heavy medium cyclone (32) is connected by way of a duct (37') with the feed of a hydrocyclone arrangement of at least two hydrocyclones (39, 40), which are provided in series one behind the other for the separation of the heavy PET component from the lighter components of a suspension comprising the comminuted product, that a draining stage (45) is arranged downstream of this hydrocyclone arrangement (39, 40) and for the heavy downflow (43), which consists of the PET particles, of the last hydrocyclone (40) in the transport direction of the particles to be separated, that a drying stage (21) is connected after the draining stage, and that disposed in the further course of conveying of the particles to be separated are a classifier and thereafter a colour sorter of the classified stock.

4. Arrangement according to claim 4, characterised thereby that a connection (37) for the heavy medium of the overflow (34) of the heavy medium cyclone (32) is provided in the suspension container (11).

5. Arrangement according to claim 3 or 4, characterised thereby that a colour sorter (28) is connected to each outlet container (27a to 27b), which has PET particles of a specific classification, of the classifier (27).

6. Arrangement according to one of claims 3 to 5, characterised thereby that an extruder (29), with communiting of the extruded PET filaments, is provided for the PET parts of a specific colour and is arranged downstream of the respective colour sorter.

7. Arrangement according to claim 6, characterised thereby that a crystallising device (30) is provided following the extruder (29).

## Revendications

1. Procédé de récupération des composants PET (polyester = téréphtalate de polyéthylène) de produits usés contenant du PET, les produits contenant du PET étant fragmentés, séparés à l'air, lavés, séparés des autres composants, égouttés et séchés, une partie du métal contenu dans ces produits étant également extraite, caractérisé en ce que, dans un premier temps, la séparation des particules métalliques, de préférence des particules d'aluminium, s'effectue dans un milieu dense au moyen d'un hydrocyclone (32), en ce que les particules de PET sont ensuite séparées des particules en suspension en d'autres matières, y compris en d'autres matières plastiques, au moyen d'une autre disposition d'hydrocyclones (39, 40), puis en ce que les particules de PET égouttées et séchées sont classées (27), et en ce que les particules de PET classées et séchées sont ensuite triées selon leur couleur (28).

2. Procédé selon la revendication 1, caractérisé en ce que le trop-plein (46, 47) contenant les composants légers ainsi que l'écoulement inférieur plus lourd (44) qui résultent de la disposition d'hydrocyclones (39, 40) passent chacun par une étape d'égouttage et de séchage (45, 21).

3. Dispositif pour la mise en oeuvre du procédé selon la revendication 1 ou 2, comportant un broyeur, un séparateur à air, une disposition de lavage, une disposition de séparation, un dispositif de séchage, un dispositif d'égouttage, ainsi qu'un séparateur de particules métalliques, caractérisé en ce qu'un cyclone à milieu dense (32) est prévu pour séparer les particules de PET des particules métalliques (de préférence des particules d'aluminium), en ce que le trop-plein (34) du cyclone à milieu dense (32) contenant les particules plus légères en PET et en d'autres matières est relié par une conduite (37') à l'entrée d'une disposition d'hydrocyclones composée d'au moins deux hydrocyclones (39, 40) disposés l'un derrière l'autre qui sont prévus pour séparer la portion de PET lourde des composants plus légers d'une suspension contenant les produits fragmentés, en ce qu'une étape d'égouttage (45) est placée en aval de cette disposition d'hydrocyclones (39, 40) pour l'écoulement inférieur (43) lourd du dernier hydrocyclone (40) par rapport au sens de déplacement des particules à séparer, écoulement inférieur qui est constitué par les particules de PET, en ce qu'une étape de séchage (21) suit l'étape d'égouttage, et en ce qu'un classificateur puis un trieur de couleur des particules classées se trouvent dans la suite du parcours des particules à séparer.

4. Dispositif selon la revendication 3, caractérisé en ce qu'un raccordement (37) est prévu pour l'écoulement de la suspension dense du trop-plein (34) du cyclone à milieu dense (32) dans le récipient de la suspension (11).

5. Dispositif selon la revendication 3 ou 4, caractérisé en ce qu'un trieur de couleur (28) est raccordé à chaque réservoir de sortie (27a à 27d) du classificateur (27) contenant des particules de PET d'une certaine classe.

6. Dispositif selon l'une des revendications 3 à 5, caractérisé en ce qu une extrudeuse (29) fragmentant les fils de PET extrudés est prévue pour les particules de PET d'une certaine couleur et est placée en aval de chaque trieur de couleur.

7. Dispositif selon la revendication 6, caractérisé en ce qu'un dispositif de cristallisation (30) est prévu à la suite de l'extrudeuse (29).
